# EUROPÄISCHE PATENTSCHRIFT

(11) **EP 0 533 627 B1**
(45) Veröffentlichungstag und Bekanntmachung des Hinweises auf die Patenterteilung: **22.11.1995**
(21) Anmeldenummer: 92810707.7
(22) Anmeldetag: 14.09.1992
(51) Int. Cl.: F16K 27/04

(54) **Wege-Schieberventil**
Multiple way sliding valve
Distribiteur à tiroir

(30) Priorität: 18.09.1991 CH 2756/91
(43) Veröffentlichungstag der Anmeldung: 24.03.1993
(73) Patentinhaber: MAATSCHAP J.A. GROTENHUIS c.s., NL-6544 ZB Nijmegen (NL); DE VAN MULLEKOM FAMILY TRUST, Horsley Park 2164 NSW (AU)
(72) Erfinder: Grotenhuis, Josef Anton, NL-6544 ZB Nijmegen (NL); Van Mullekom, Arnold Petrus, Horsley Park 2164 NSW (AU)
(74) Vertreter: Eder, Carl E.

(56) Entgegenhaltungen:
- DE-A- 2 038 115
- FR-A- 2 136 104

## Beschreibung

Ein Wege-Schieberventil besteht im wesentlichen aus einem Gehäuse mit einer Durchgangsbohrung, in welcher ein in der Längsrichtung der Bohrung verschiebbarer Steuerkolben sitzt, wobei das Gehäuse mit quer zur Durchgangsbohrung angeordneten und in diese mündenden Anschlussbohrungen für die Nutzanschlüsse versehen ist, nämlich für die Zu- und Rücklaufleitungen P und T sowie die Verbraucher-Leitungen A und B. Zum Verschieben des Steuerkolbens dienen manuelle, elektromagnetische, hydraulische oder pneumatische Bedienungselemente. Solche Ventile werden in unzählbaren Stückzahlen für flüssige und gasförmige Materien benutzt. Die Qualität eines solchen Ventils hängt davon ab, mit welchen Toleranzen der Steuerkolben in der Durchgangsbohrung sitzt. Von der Güte dieser Passung hängen die Leckverluste ab. Infolge der durch die geringen Toleranzen bewirkten Reibung sowie durch gelegentlich im Durchflussmedium vorhandene kleine Fremdkörper entsteht ein Abrieb, wodurch sich die Leckwerte erhöhen, die Qualität des Ventils sich also verringert. Wenn die Leckverluste so gross geworden sind, dass die Funktion unzulässig beeinflusst wird, gilt das Ventil als defekt und muss ersetzt werden, da dieser Verschleiss sich nicht durch eine Reparatur rückgängig machen lässt. Daher muss das ganze Ventil ausgetauscht werden, was arbeitsintensiv und teuer ist, arbeitsintensiv deswegen, weil alle Leitungen vom Gehäuse gelöst und mit der nötigen Sorgfalt wieder dicht ans neue Gehäuse angeschlossen werden müssen, teuer deswegen, weil üblicherweise das ganze Ventil, also bei einem Elektroventil auch die zum Verschieben des Steuerkolbens dienenden Elektromagnete ersetzt werden, die zwar nicht den wesentlichen aber doch einen zusätzlichen Kostenfaktor eines derartigen Ventils bilden.

Um das Lösen und das erneute Anschliessen aller Leitungen am Gehäuse zu vermeiden, benutzt man in der Praxis die sogenannten Anschlussplatten, und zwar für nur ein Ventil eine Einzelanschlussplatte und für mehrere Ventile eine Sammelanschlussplatte. Die Ventilseite einer solchen Anschlussplatte ist geschliffen und sie ist mit einem der Nenngrösse entsprechenden Lochbild d.h. einer entsprechenden Anordnung der Anschlussbohrungen versehen. Die Anschlussfläche des Ventils ist ebenfalls geschliffen, mit O-Ringen versehen und weist das gleiche Loch- oder Anschlussbild auf. Die meisten Anschlussbilder sind genormt. Das Ventil wird mit Schrauben auf der Anschlussfläche befestigt. Die Abdichtung erfolgt über die O-Ringe. Die Nutzanschlüsse P, T, A und B sind in der Anschlussplatte angeordnet. So lässt sich ein defektes Ventil zwar schnell und einfach ohne Lösen von Leitungen auswechseln; der Nachteil, dass das Ventil mit allen noch intakten Bestandteilen ausgewechselt werden muss, ist aber durch diese konstruktive Massnahme nicht behoben, die zudem die Anschaffung einer Anschlussplatte bedingt.

Die vorliegende Erfindung dient nun der Behebung aller vorgenannten Nachteile, d.h. sie macht es möglich, nur die im Normalfall abgenützten Teile eines Ventils zu ersetzen, dies auf einfache Art und Weise und zudem ohne dass die Ventile mit einer Anschlussplatte versehen sein müssen. Dies wird dadurch erreicht, dass bei einem Ventil der vorstehend beschriebenen Art das Gehäuse aus zwei Teilen besteht, nämlich einem mit einer im Querschnitt kreisrunden Durchgangsbohrung sowie quer zu dieser verlaufenden und in diese mündenden Nutzanschlüssen P, T, A und B versehenen Block und einer in dieser Durchgangsbohrung angeordneten, aus ihr herausnehmbaren, mit fünf den Nutzanschlüssen zugeordneten Fenstern versehenen Hülse, in welcher der Steuerkolben axial verschiebbar gelagert ist, wobei erfindungsgemäss die Hülse mit mindestens dem wesentlichen Teil ihrer Mantelfläche satt und selbstdichtend in der Durchgangsbohrung sitzt und in ihrer Mantelfläche mindestens eine die beiden voneinander am weitesten entfernten Fenster miteinander verbindende Rille aufweist. Besonders vorteilhaft ist es, wenn die Durchgangsbohrung konisch ist und die Hülse eine Mantelfläche gleicher Konizität aufweist, die zwischen 1° und 4° vorzugsweise zwischen 1,5° und 2,5° liegt.

An sich sind zweiteilige Gehäuse bereits bekannt, ein solches mit einer konischen Hülse aus der französischen Patentschrift 2 136 104 und ein solches mit einer zylindrischen Hülse aus dem deutschen Gebrauchsmuster 1 892 467. In der französischen Schrift, die die Merkmale des Oberbegriffes des Anspruchs 1 aufweist, sind jedoch die Hülsen zwischen den Fenstern mit O-Ringen versehen. Bei einer derartigen Konstruktion ist es jedoch nicht möglich, die beiden voneinander am weitesten entfernten Fenster durch eine in der Hülse angeordnete Rille zu verbinden. Die Anordnung dieser durch Fräsen herstellbare Verbindungsrille in der Hülse macht es möglich, auf die Herstellung einer Verbindungsleitung im Gussverfahren zu verzichten, wobei es nicht nur möglich wird, einfach herzustellende Gussgehäuse zu verwenden, sondern auch Gehäuse, die aus Walzmaterial hergestellt sind und daher eine wesentlich grössere Festigkeit oder bei einer nicht höheren Festigkeit wesentlich kleinere Abmessungen aufweisen.

Nachfolgend wird anhand der Beiliegenden Zeichnung als Ausführungsbeispiel der Erfindung ein erfindungsgemässes 4/3 - Wege-Schieber-Ventil beschrieben. In der Zeichnung zeigt
die Fig. 1 das Prinzip eines 4/3-Wege-Schieber-Ventils,
die Fig. 2 - 7 den Block des neuen Ventils, nämlich

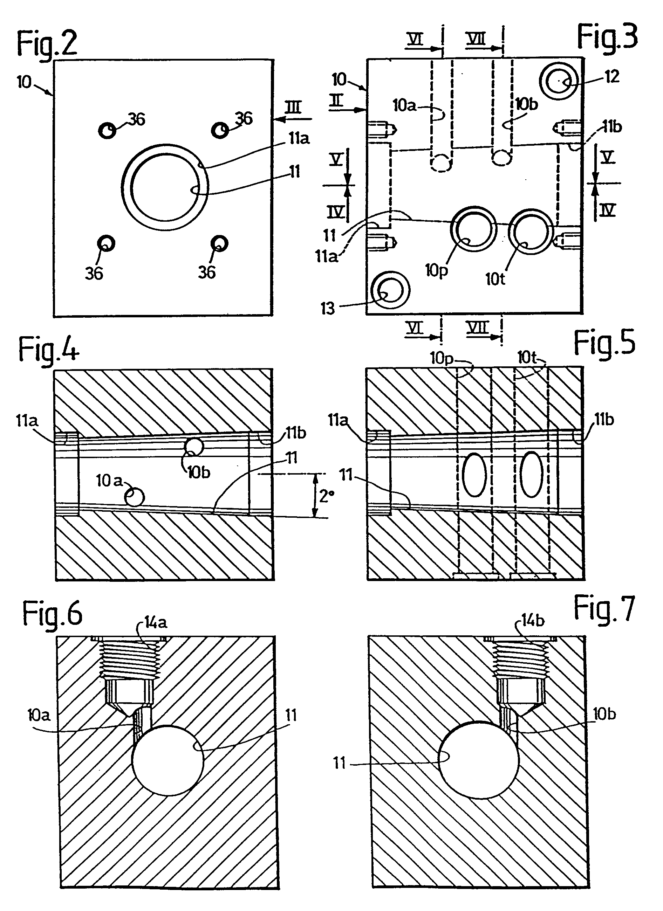

die Fig. 2 eine Stirnansicht in Richtung der Durchgangsbohrung, und zwar in Richtung des Pfeiles II der Fig. 3,
die Fig. 3 eine Seitenansicht in Richtung des Pfeils III der Fig. 2,
die Fig. 4 einen Schnitt nach der Linie IV-IV der Fig. 3,
die Fig. 5 einen Schnitt nach der Linie V-V der Fig. 3,
die Fig. 6 einen Schnitt nach der Linie VI-VI der Fig. 3 und
die Fig. 7 einen Schnitt nach der Linie VII-VII der Fig. 3;

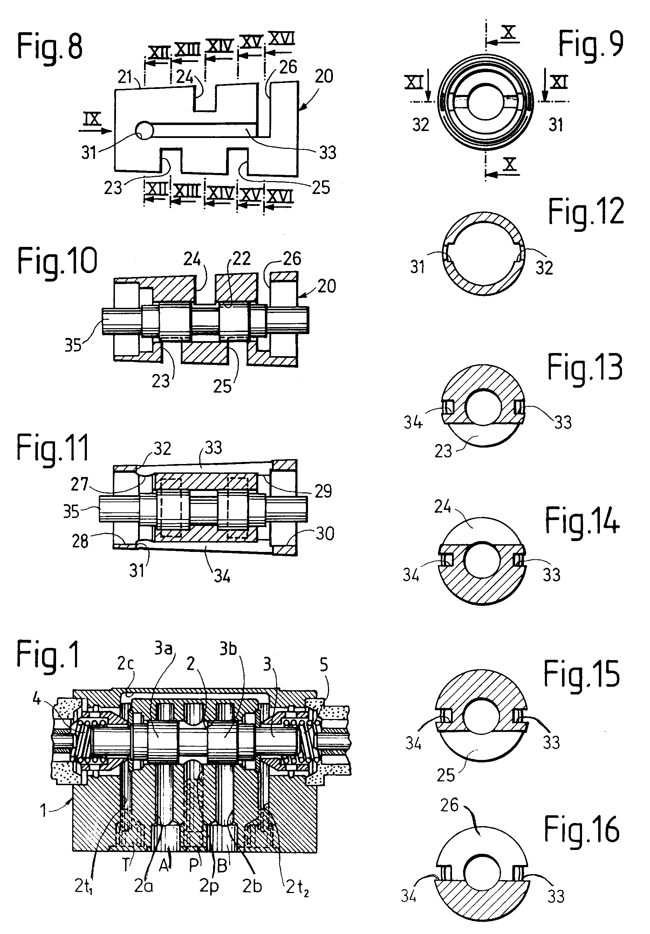

die Fig. 8 - 16 zeigen die Hülse des neuen Ventils und zwar
die Fig. 8 eine Seitenansicht,
die Fig. 9 eine Stirnansicht in Richtung des Pfeils IX in der Fig. 8,
die Fig. 10 einen Schnitt nach der Linie X-X der Fig. 9, aber mit eingesetztem Steuerkolben,
die Fig. 11 einen Schnitt nach der Linie XI-XI der Fig. 9, ebenfalls mit eingesetztem Steuerkolben,
die Fig. 12 - 16 Schnitte durch die Fig. 8 und zwar
die Fig. 12 nach der Linie XII-XII,
die Fig. 13 nach der Linie XIII-XIII,
die Fig. 14 nach der Linie XIV-XIV,
die Fig. 15 nach der Linie XV-XV und
die Fig. 16 nach der Linie XVI-XVI.

Wie man aus der in der Fig. 1 dargestellten Prinzipzeichnung eines 4/3-Wege-Schieberventils, also eines Schieberventils mit vier Nutzanschlüssen und drei Schaltstellungen ersehen kann, weist das Gehäuse 1 eine Durchgangsbohrung 2 auf, in welcher ein in seiner Längsrichtung verschiebbarer Steuerkolben oder Schieber 3 angeordnet ist. In die Durchgangsbohrung 2 münden die vier Querbohrung, die Bohrung 2p mit der Anschlussmündung P zum Anschluss der Druckleitung, die beiden miteinander durch die Leitung 2c verbundenen Bohrungen 2t₁ und 2t₂, von denen eine mit der Mündung T zum Anschluss der Rückleitung versehen ist, sowie die Bohrungen 2a und 2b mit den Anschlussmündungen A bzw. B zum Anschluss der Arbeitsleitungen.

Beim Steuerkolben 3 handelt es sich um einen durch die beiden Federn 4 und 5 in der gezeichneten Mittelstellung gehaltenen Kolben, in welcher seine beiden dicken Abschnitte 3a und 3b je eine der beiden Bohrungen 2a und 2b absperren. Dadurch ist natürlich auch der Weg zwischen der Bohrung 2p und den Bohrungen 2t unterbrochen.

Wenn nun durch irgend eine Kraft, beispielsweise durch einen nicht gezeichneten Elektromagneten, der Steuerkolben 3 entgegen der Kraft der Feder 4 etwas nach links verschoben wird, so wird die Leitung 2p mit der Leitung 2a verbunden und die Leitung 2b mit der Leitung 2t₂. Dadurch kann das Druckmedium vom Anschluss P zu dem mit der Eingangsleitung eines Verbrauchers verbundenen Anschluss A strömen, und von dem mit der Ausgangsleitung des Verbrauchers verbundenen Anschluss B über die Verbindungsleitung 2c zur Mündung T, an den eine beispielsweise ins Reservoir führende Rückleitung angeschlossen ist. Wird aber der Steuerkolben 3 entgegen der Kraft der Feder 5 nach rechts verschoben, so wird die Leitung 2p mit der Leitung 2b verbunden und die Leitung 2a mit der Leitung 2t₁. Dadurch kann das Druckmedium vom Anschluss P zum Anschluss B strömen, von dort durch den nicht gezeichneten Verbraucher, aber in umgekehrter Strömungsrichtung als bei der andern Stellung des Steuerkolbens, also vom Anschluss B zum Anschluss A und von dort zum Anschluss T.

Wie ohne weiteres ersichtlich ist, entsteht durch das Hin- und Herschieben des Steuerkolbens 3 in der Längsbohrung 2 ein Abrieb, der eine Verkleinerung des Kolbendurchmessers und ein Aufweiten der Bohrung bewirkt, bis der Kolben nicht mehr hinreichend dicht in der Bohrung sitzt. Dann hat das Ventil ausgedient und muss ersetzt werden.

Damit nun nicht das ganze Ventil ersetzt werden muss und damit insbesondere auch darauf verzichtet werden kann, die Anschlussleitungen von den Anschlüssen P, T, A, B zu lösen und wieder dicht anzuschliessen, besteht beim erfindungsgemässen Ventil das Gehäuse aus zwei Teilen, nämlich einem Block und einer in ihm sitzenden Hülse. Diese beiden Teile sind in der Zeichnung dargestellt und werden nachfolgend beschrieben.

Der als Ganzes mit 10 bezeichnete Block weist eine abgesehen von zwei kurzen, zylindrischen Abschnitten 11a und 11b konische Längsbohrung 11 auf. Die Mantellinien dieser konischen Bohrung bilden mit der Achse der Bohrung einen Winkel 1° - 4°, vorzugsweise von 1 1/2° - 2 1/2°, beispielsweise von 2°. Zwei abgestufte Bohrungen 12 und 13 dienen dazu, mehrere Ventilgehäuse gleicher Abmessungen durch Schrauben miteinander zu einer festen Säule zu verbinden. Zwei zu diesen der Befestigung dienenden Bohrungen parallele, ebenfalls durchgehende Bohrungen 10p und 10t schneiden die konische Bohrung 11 an. Diese dienen als Steigleitungen, die Bohrung 10p entspricht der im Prinzipschema gezeichneten Bohrung 2p, dient also der Zuleitung des Druckmediums, während die Bohrung 10t der Bohrung 2t entspricht und der Rückleitung des Druckmediums dient. Eine Eindrehung am einen Ende jeder Bohrung dient zum Einlegen eines Dichtungsrings, wie das bei aneinander gesetzten Ventilen üblich und bekannt ist.

In die konische Längsbohrung 11 münden auch die beiden Bohrungen 10a und 10b, die den Bohrungen 2a bzw. 2b der Fig. 1 entsprechen und nach aussen in die Gewindebohrungen 14a bzw. 14b übergehen. Diese Anschlussbohrungen dienen dazu, das Ventil über eine Hinleitung und eine Rückleitung mit einem Verbraucher zu verbinden.

Der zweite Teil des Ventilgehäuses wird durch die in den Fig. 8 bis 16 dargestellte, als Ganzes mit 20 bezeichnete Hülse gebildet. Diese Hülse weist aussen eine konische, genau in die konische Bohrung des Blocks 10 passende Mantelfläche 21 auf und innen eine zylindrische Bohrung 22. Die Hülse 20 ist mit vier radialen Einschnitten 23, 24, 25 und 26 versehen. Diese Einschnitte sind so angeordnet, dass ihre Mittelebene dann, wenn die Hülse 20 satt in der Bohrung 11 des Blockes 10 sitzt, durch die Achsen der vorstehend beschriebenen Bohrungen 10a, 10p, 10b und 10t gehen. An jedem Ende erweitert sich die Bohrung 22 in zwei Stufen, die am dünneren Ende mit 27 und 28 und am dickeren Ende mit 29 und 30 bezeichnet sind.

Im Abschnitt 27 weist die Hülse zwei Querbohrungen 31 und 32 auf, die über eine in die konische Mantelfläche eingelassene Nut 33 bzw. 34 mit dem radialen Einschnitt 26 verbunden sind.

In der Bohrung 22 ist nun, wie das in der Fig. 10 dargestellt ist, der Schieber oder Kolben 35 verschiebbar gelagert, der gleich ausgebildet ist, wie der anhand der Fig. 1 beschriebene Schieber 3, sodass sich nicht nur eine detaillierte Beschreibung dieses Schiebers sondern auch die erneute Beschreibung der Funktion des Ventils erübrigt.

Wichtig und daher festzuhalten sind jedoch zwei wesentliche Vorteile. Der eine betrifft den Unterhalt, der andere die Herstellung:
Wie man ohne weiteres sieht, kann man die Hülse 20, die satt im Block 10 sitzt, dort durch einen nicht gezeichneten, an sich bekannten, durch in Schraubenlöcher 36 eingeschraubte Schrauben befestigten Abschlussdeckel festgehalten wird und so mit dem Block zusammen das Ventilgehäuse bildet, nach dem Entfernen dieses Deckels herausnehmen und zusammen mit dem Schieber 35 auswechseln, sobald einer dieser beiden Teile eine unzulässige grosse Abnutzung aufweist. Dieses Auswechseln ist einerseits vom Preis der Ersatzteile aus gesehen wesentlich kostengünstiger als das Ersetzen eines ganzen Ventils. Andererseits ist der Arbeitsaufwand für das Ersetzen der defekten Teile im Vergleich zum Auswechseln von nicht mit Anschlussplatten versehenen Ventilen wesentlich geringer, da es nicht mehr nötig ist, die Anschlussleitungen vom Ventilgehäuse zu trennen und sie am neuen Gehäuse wieder dicht zu befestigen, was ja üblicherweise nicht ohne zusätzlichen Ersatz von für die Demontage beschädigten Teilen möglich ist. Falls aber das undicht gewordene Ventil Teil einer durch mehrere miteinander fest verbundene Ventile gebildeten Ventilgruppe ist, so war es bisher nötig, das auszuwechselnde Ventil, das mittels durch die Bohrungen 12 und 13 hindurchgeführter Schrauben mit den übrigen Ventilen fest und dicht verbunden ist, nach dem Lösen des ganzen Verbundes aus der Gruppe herauszunehmen und durch ein neues Ventil zu ersetzen und nachher die ganze Gruppe wieder fest und dicht miteinander zu verbinden. Dieser letztgenannte Nachteil liess sich bis jetzt nur durch die Verwendung einer Anschlussplatte vermeiden, wodurch sich also der Aufwand beim Auswechseln der Ventile mit abgenutzten Teilen auf Kosten eines entsprechend höheren Anschaffungspreises verringern liess. Da es beim neuen Ventil ohne weiteres möglich ist, nur die durch Abnützung undicht gewordenen Teile, also nicht mehr das ganze Ventilgehäuse, auszuwechseln, kann auf die Verwendung von Anschlussplatten verzichtet werden.

Auch bei der Herstellung des Ventils ergibt sich eine nicht unwesentliche Vereinfachung dadurch, dass der in der Fig. 1 mit 2c bezeichnete Verbindungskanal, dessen Herstellung nur giesstechnisch möglich ist und dessen rauhe Gusshaut sich nicht mechanisch zu einer Oberfläche mit einer besseren Glätte verarbeiten lässt, im erfindungsgemässen Ventil durch eine oder zwei ausserordentlich einfach herzustellende Rillen 32 und 34 in der Oberfläche 21 der Hülse 20 gebildet wird.

Wie vorstehend bereits erwähnt, kann der Block 10 eines erfindungsgemässen Ventils auch aus Walzmaterial, z.B. aus legiertem Stahl hoher Festigkeit, herstellt werden. Die Verwendung eines derartigen Materials macht es möglich, Ventile üblicher Abmessungen für einen weit höheren Nenndruck als bisher zu verwenden.

Obwohl vorstehend als Ausführungsbeispiel der Erfindung ein Ventil mit einer konischen Bohrung beschrieben wird, ist es auch möglich, die Bohrung und die Aussenfläche der Hülse zylindrisch auszugestalten. Allerdings ist bei einer solchen Ausführungsform eine hermetische Abdichtung nicht möglich. Wenn man bereit ist, zwischen Block und Hülse den gleichen, an sich vernachlässigbaren Leckverlust in Kauf zu nehmen wie zwischen Hülse und Kolben, so kann man Ventile mit zylindrischer Bohrung verwenden, die sich preiswerter herstellen lassen als solche mit konischer bohrung.

## Patentansprüche

1. Als Steuerorgan verwendbares, aus Gehäuse und Steuerkolben (35) bestehendes Wege-Schieberventil, bei welchem das Gehäuse aus zwei Teilen, nämlich einem mit einer im querschnitt kreisrunden Durchgangsbohrung (11) sowie quer zu dieser verlaufenden und in diese mündenden Nutzanschlüssen P,T,A und B versehenen Block (10) und einer in dieser Durchgangsbohrung (11) angeordneten, aus ihr herausnehmbaren, mit fünf den Nutzanschlüssen zugeordneten Fenstern versehenen Hülse (20) gebildet wird, wobei der Steuerkolben (35) in der hülse axial verschiebbar gelagert ist, dadurch gekennzeichnet, dass die Hülse (20) mit mindestens dem wesentlichen Teil ihrer Mantelfläche (21) satt und selbstdichtend in der Durchgangsbohrung (11) sitzt und in ihrer Mantelfläche mindestens eine die beiden voneinander am weitesten entfernten Fenster miteinander verbindende Rille (33, 34) aufweist.

2. Wege-Schieberventil nach Anspruch 1, dadurch gekennzeichnet, dass die Durchgangsbohrung (11) konisch ist und die Hülse (20) eine Mantelfläche gleicher Konizität aufweist.

3. Wege-Schieberventil nach Anspruch 2, dadurch gekennzeichnet, dass die Mantellinien der Durchgangsbohrung mit der Achse einen Winkel von 1° bis 4°, vorzugsweise von 1,5° bis 2,5° bilden.

4. Wege-Schieberventil nach Anspruch 1, dadurch gekennzeichnet, dass die Durchgangsbohrung (11) und die Mantelfläche (21) der Hülse zylindrisch sind.

5. Wege-Schieberventil nach einem der Ansprüche 1 bis 3, dadurch gekennzeichnet, dass die Hülse (20) aus einem Material besteht, dessen thermischer Ausdehnungskoeffizient in den für den Einsatz vorgesehenen Temperaturbereich mit dem thermischen Ausdehnungskoeffizienten des Blockes (10) übereinstimmt.

6. Wege-Schieberventil nach einem der Ansprüche 1 bis 5 dadurch gekennzeichnet, dass der Block (10) aus Walzmaterial besteht.

7. Wege-Schieberventil nach einem der Ansprüche 1 bis 5 dadurch gekennzeichnet, dass der Block (10) aus hochlegiertem Stahl besteht.

8. Wege-Schieberventil nach einem der Ansprüche 1 bis 7, dadurch gekennzeichnet, dass der Block (10) ein Quader ist, dass die Achse der Durchgangsbohrung (11) senkrecht zu einem Oberflächenpaar verläuft und dass zwei zueinander parallele, die Durchgangsbohrung anschneidende und mit ihren Enden die Nutzanschlüsse P und T bildende Durchflussleitungen (10p, 10t) vorhanden sind, die senkrecht zu einem der anderen Oberflächenpaare verlaufen.

9. Wege-Schieberventil nach Anspruch 8, dadurch gekennzeichnet, dass die beiden Durchflussleitungen (10p, 10t) mindestens am einen Ende je eine Erweiterung für die Aufnahme eines Dichtungsringes aufweisen.

10. Wege-Schieberventil nach Anspruch 8 oder 9, dadurch gegennzeichnet, dass der Block (10) mindestens zwei zu den Durchflussleitungen parallele durchgehende Öffnungen (12, 13) zur Aufnahme von Verbindungsmitteln aufweist, mit dem ein Ventil mit einem benachbarten Ventil so verbunden werden kann, dass die Durchflussleitungen (10p, 10t) miteinander verbunden sind.

## Claims

1. Multiway slide valve which is usable as control organ, consists of a housing and a control piston (35) and in which the housing is formed of two parts, namely a block (10), which is provided with a passage bore (11), which is circularly round in cross-section, and with flow connections P, T, A and B extending transversely thereto and opening into this, and a sleeve (20), which is arranged in this passage bore (11), is withdrawable therefrom and provided with five windows associated with the flow connections, wherein the control piston (35) is borne to be axially displaceable in the sleeve, characterised thereby, that the sleeve (20) sits by at least the essential part of its envelope surface (21) flush and self-sealingly in the passage bore (11) and displays at least one groove (33, 34), which connects together both the windows furthest apart one from the other, in its envelope surface.

2. Multiway slide valve according to claim 1, characterised thereby, that the passage bore (11) is conical and the sleeve (20) displays an envelope surface of equal conicity.

3. Multiway slide valve according to claim 2, characterised thereby, that the envelope lines of the passage bore are at an angle of 1° to 4°, preferably 1.5° to 2.5°, to the axis.

4. Multiway slide valve according to claim 1, characterised thereby, that the passage bore (11) and the envelope surface (21) of the sleeve are cylindrical.

5. Multiway slide valve according to one of the claims 1 to 3, characterised thereby, that the sleeve (20) consists of a material, the thermal co-efficient of expansion of which agrees with the thermal co-efficient of expansion of the block (10) in the temperature range envisaged for use.

6. Multiway slide valve according to one of the claims 1 to 5, characterised thereby, that the block (10) consists of rolled material.

7. Multiway slide valve according to one of the claims 1 to 5, characterised thereby, that the block (10) consists of high-alloyed steel.

8. Multiway slide valve according to one of the claims 1 to 7, characterised thereby, that the block (10) is a parallelipipedon, that the axis of the passage bore (11) extends perpendicularly to a pair of surfaces and that two mutually parallel throughflow ducts (10p, 10t) are present, which intersect the passage bore, by their ends form the flow connections P and T and extend perpendicularly to one of the other pairs of surfaces.

9. Multiway slide valve according to claim 8, characterised thereby, that both the throughflow ducts (10p, 10t) each at least at one end display a respective enlargement for the reception of a sealing ring.

10. Multiway slide valve according to claim 8 or 9, characterised thereby, that the block (10) displays at least two passage openings (12, 13), which are parallel to the throughflow ducts, for the reception of connecting means, by which one valve can be so connected with a neighbouring valve that the throughflow ducts (10p, 10t) are connected together.

## Revendications

1. Valve-distributeur, utilisable en tant qu'organe distributeur et constituée d'un corps et d'un piston-distributeur (35), dans laquelle le corps est formé de deux parties, à savoir un bloc (10), comportant un alésage traversant (11) à section transversale circulaire et des raccords d'utilisation P, T, A et B qui sont orientés perpendiculairement à cet alésage et débouchent dans ce dernier, et un manchon (20) qui est disposé dans cet alésage traversant (11), est agencé de façon à pouvoir être retiré de cet alésage et comporte cinq fenêtres associées aux raccords d'utilisation, le piston-distributeur (35) étant monté d'une manière coulissante dans le manchon suivant sons axe, caractérisée en ce que, par au fins l'essentiel de sa surface périphérique (21), le manchon (20) est emboîté en en épousant bien la forme et d'une manière auto-étanchéifiée dans l'alésage traversant (11) et en ce que, dans sa surface périphérique, il présente au moins une rainure (33, 34) faisant communiquer entre elles les deux fenêtres les plus éloignées l'une de l'autre,

2. Valve-distributeur selon la revendication 1, caractérisée en ce que l'alésage traversant (11) est conique et le manchon (20) comporte une surface périphérique de même conicité,

3. Valve-distributeur selon la revendication 2, caractérisée en ce que les génératrices de l'alésage traversant font avec l'axe un angle de 1° à 4°, de préférence de 1,5° à 2,5°,

4. Valve-distributeur selon la revendication 1, caractérisée en ce que l'alésage traversant (11) et la surface périphérique (21) du manchon sont cylindriques.

5. Valve-distributeur selon l'une des revendications 1 à 3, caractérisée en ce que le manchon (20) est en une matière dont le coefficient de dilatation thermique coïncide, dans le domaine de températures prévu pour l'utilisation, avec le coefficient de dilatation thermique du bloc (10),

6. Valve-distributeur selon l'une des revendications 1 à 5, caractérisée en ce que le bloc (10) est réalisé à partir d'un produit laminé,

7. Valve-distributeur selon l'une des revendications 1 à 5, caractérisée en ce que le bloc (10) est en acier fortement allié.

8. Valve-distributeur selon l'une des revendications 1 à 7, caractérisée en ce que le bloc (10) est un parallélépipède, en ce que l'axe de l'alésage traversant (11) est orienté perpendiculairement à une paire de surfaces et en ce qu'il est prévu deux conduits de circulation (10p, 10t), parallèles entre eux, qui recoupent l'alésage traversant et constituent par leurs extrémités les raccords d'utilisation P et T et qui sont orientés perpendiculairement à l'une des deux autres paires de surfaces.

9. Valve-distributeur selon la revendication 8, caractérisée en ce qu'au moins à une extrémité, les deux conduits de circulation (10p, 10t) comportent chacun une partie plus large servant à recevoir une bague d'étanchéité.

10. Valve-distributeur selon la revendication 8 ou 9, caractérisée en ce que le bloc (10) comporte au moins deux passages traversants (12, 13) parallèles aux conduits de circulation et destinés à recevoir des moyens de liaison à l'aide desquels une valve peut être reliée à une valve voisine d'une façon telle que les conduits de circulation (10p, 10t) communiquent entre eux,
